# EUROPEAN PATENT APPLICATION

(11) **EP 1 126 718 A2**
(43) Date of publication of application: **22.08.2001**
(21) Application number: 01101745.6
(22) Date of filing: 25.01.2001
(51) Int. Cl.: H04N 7/24

(54) **Image decoding apparatus and image decoding method**

(30) Priority: 26.01.2000 JP 2000017604
(71) Applicant: NEC CORPORATION, Tokyo (JP)
(72) Inventor: Haneda, Taro, c/o NEC Corporation, Tokyo (JP)
(74) Representative: Glawe, Delfs, Moll & Partner

(57) **Abstract**

An image decoding apparatus, a semiconductor device, and a image decoding method are provided, capable of reducing the apparatus size and reducing the maximum value of current consumption, when simultaneously outputting a multi-channel digital images. A multiplexing processing portion 23 of the image decoding apparatus outputs a multiplexed data B1 obtained by time division multiplexing of the image data A1 to A3 stored in each memory 22 after output from the multi-channel image decoding portion 10 and a phase output signal C2 which indicates a phase of any one of image data among multiplexed image data A1 to A3. A synthesizing output processing portion 24 generates and outputs synthesized image data B2 for displaying more than two image data among image data A1 to A3 on one image screen. A selection output portion 25 outputs any one of the input multiplexed image data B1, the synthesized image data B2, and any one of image data A1 to A3 as a digital image data.

## Description

### BACKGROUND OF THE INVENTION

### Field of the Invention

The present invention relates to an image decoding apparatus, a semiconductor device, and an image decoding method for decoding multi-channel coded data and for outputting multiple image data at the same time.

### Background Art

Recently, two moving image coding standard called MPEGs (Moving Picture Experts Group) have been practically implemented as moving image coding standards; one is MPEG 1 (International Electric Communication Union ITU-T Recommendation H 261) which is a standard for moving image and storage media, and the other is MPEG 2 (ITU-T Recommendation H262), which corresponds to higher image quality and higher speed coding than MPEG 1. Among these standards, MPEG 2 has received widespread attention as a media system integrated image coding standard aimed at an interactive operations in the fields of communication, storage, broadcasting, and computers. MPEG 2 provides an image quality equivalent to the present television SDTV in an NTSC system with an information rate of 4 to 9 megabits per second, and provides HDTV (high resolution television) image quality with an amount of information of 15 to 30 megabits. An explanation is provided below for MPEG 1 and MPEG 2, referred to overall as MPEG.

In digital television broadcasting such as BS (Broadcast Satellite) broadcasting, three to four channel SDTV images are transmitted by a one-channel volume of HDTV image coded by the above-described MPEG.

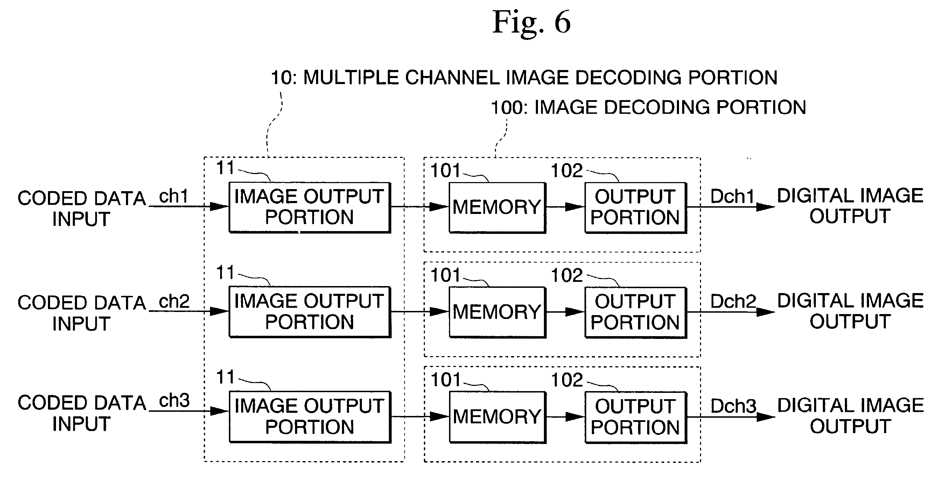

Fig. 6 is a block diagram showing the structure of the conventional image decoding system, used for receiving one channel broadcasting of the above-mentioned HDTV image, or three-channel simulcast of an SDTV image. In Fig. 6, the input coded data ch1 to ch3 represents coded bit streams in MPEG form.

The conventional image decoding apparatus shown in Fig. 6 comprises a multi-channel image decoding portion 10, which decodes the input three channel coded data chl to ch3 and outputs respective image data A1 to A3 corresponding to each channel 1 to 3, and three image output portions 100 for outputting input image data A1 to A3 as each digital image data Dch1 to Dch3. The multi-channel image decoder 10 comprises three image decoding portions 11 corresponding to each channel image.

In the above multi-channel image decoding portion 10, each image decoder 11 decodes input coded data chl to ch3 respectively and outputs each decoded data A1 to A3 to each image output portion 100. Subsequently, in the image output portion 100, input image data are temporarily stored in a memory 101. Subsequently, the output portion 102 reads the image data stored in the memory 2 and outputs the read image data as the digital image data output.

It is noted that image output portion 100 outputs a clock signal, with which the digital image data C1 are synchronized, in addition to the digital image data. However, the clock to be output is not shown in Fig. 6.

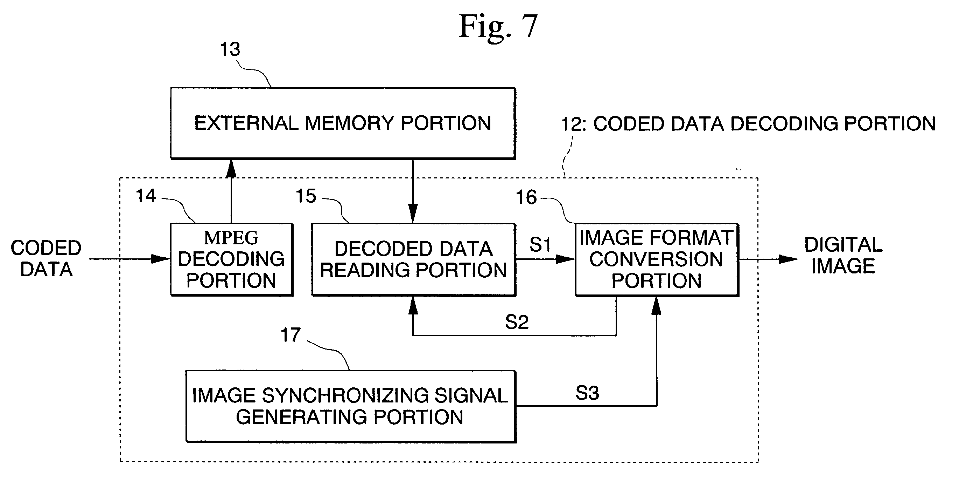

Fig. 7 is a block diagram showing the structure of the above-described image decoding portion 11. As shown in Fig. 7, the decoding portion 11 comprises a coded data decoding portion 12, and an external memory portion 13 such as a random access memory which is capable of reading and writing data.

In the above-mentioned coded data decoding portion 12, an MPEG decoding portion 14 decodes input coded data and stores the decoded data temporarily in the external memory portion 13. Subsequently, the decoded data reading portion 15 reads the decoded data in the image output order in response to the decoded data request signal S2 and output these data as the decoded data signal S1. Subsequently, the image format conversion portion 16 converts the decoded data signal S 1 input from the decoded data reading portion 15 into image data in a predetermined format in response to the output decoded data request signal S2. Subsequently, the converted image data is output from the image format conversion portion 16 in response to the input image synchronizing signal S3. The image synchronizing signal generating portion 17 generates image synchronizing signals S3 including horizontal image synchronizing signal and the vertical image synchronizing signal corresponding to the image format used for conversion in the image format conversion portion 16.

The input HDTV image or the SDTV image is decoded by the image decoding portion 11 and; after then, the decoded image data is output as the converted image data after converting the image decoded image data into a predetermined image format.

It is noted that examples of the above-described predetermined formats include a format called 1080 i format having 1920 horizontal pixels and 1080 vertical lines and a format called 480 i having 720 horizontal pixels and 480 vertical lines.

The above described conventional image decoding apparatus comprises three digital image output terminals for outputting three digital data Dch1 to Dch3 corresponding respectively to the input three channel coded data chl to ch3, and image display or the video recording within three channels are provided by connecting each digital image outputting terminal with digital input matching equipment such as digital televisions or Digital Video Tape Recorders.

However, the above-described conventional image decoding apparatus has the problem that, in the case of simultaneously outputting a plurality of channels of image data, it is difficult to reduce the size of the apparatus because the same numbers of the digital image output terminals are necessary as the numbers of channels for outputting the digital image data.

In addition, since multiple digital image data are output simultaneously, the maximum value of the current consumption is large, and the current consumption increases with the increasing data output of the digital image data.

If the maximum value of the current consumption becomes large, or if the current consumption becomes large by increasing channel number, a large volume is required for the power supply, which may result in causing a new noise.

### SUMMARY OF THE INVENTION

The present invention has been carried out to overcome the above problems. The object of the present invention is to provide a image decoding apparatus which is capable of reducing the size when a plurality of channels of image data are output, and to provide a image decoding apparatus, a semiconductor device, and a image decoding method, and the apparatus can be made in a small size, and the maximum value of current consumption can be reduced.

According to the first aspect of the present invention, an image decoding apparatus which comprises a multiple channel image data decoding device for decoding n-channel (n is an integer larger than 2) image coded data, comprising: a multiplex output device for outputting said n-channel image data after said n-channel decoded image data are time division multiplexed.

According to the second aspect, in the image decoding apparatus according to the first aspect, said multiplex output device generates and outputs said n-channel multiplexed image data after being time division multiplexed and a phase output signal showing the positional relationship of said n-channel image data after being time division multiplexed.

According to the third aspect, in the image decoding apparatus according to the second aspect, said phase output signal represents at least one phase of said n-channel image data which is multiplexed in said multiplexed image data.

According to the fourth aspect, in the image decoding apparatus according to the first aspect, said multiplex output device carries out time division multiplexing by use of a clock having a frequency of more than n times higher than the output clock used at the time for outputting single channel image data without multiplexing.

According to the fifth aspect, in the image decoding apparatus according to the first aspect, said image decoding apparatus comprises a synthesis output device which generates and outputs synthesized image data for displaying more than two images from among said n-channel image data on one image screen.

According to the sixth aspect, in the image decoding apparatus according to the fifth aspect, said image decoding apparatus comprises a selection output device for outputting any one of said multiplexed data, said synthesized image data, or any one of one channel image data from among said n-channel image data as one digital image data output.

According to the seventh aspect, in the image decoding apparatus according to claim 1, wherein said image decoding apparatus is formed on a substrate of one semiconductor integrated circuit.

According to the eighth aspect, the semiconductor device comprising a synthesis output device which generates and outputs synthesized image data for displaying more than two images on one image screen at one time out of said n-channel image data, a selection output device which outputs any one of said multiplexed data, said synthesized image data, or any one of one channel image data from among n-channel image data as one digital image data output.

According the ninth aspect, in the semiconductor device according to the eighth aspect comprising a synthesis output device which outputs more than two image data from among said n-channel image data, a selection output device which outputs any one of said multiplex data, said synthesized image data, or any one channel image data from among n-channel image data as the digital image data output.

According to the tenth aspect, an image decoding method of the present invention, which decodes input n-channel (n is an integer more than 2) image coded data and generates said n-channel image data, comprising the steps of generating and outputting a multiplexed data obtained by time division multiplexing of said n-channel image data and a phase output signal which indicates the positional relationship of said n-channel image data, which is multiplexed in said multiplexed data.

According to the eleventh aspect, in the image decoding method according to claim 10, wherein the method comprises the steps of generating synthesized image data for displaying more than two of any image data from among said n-channel image data, and outputting any one of image data from among said multiplexed data, said synthesized image data, or any one channel image data from among said n-channel image data.

### BRIEF DESCRIPTION OF THE DRAWINGS

Fig. 1 is a block diagram showing the structure of the image decoding apparatus according to an embodiment of the present invention.

Figs. 2A to 2E are timing charts explaining operations of the multiple outputting portion 21 shown in Fig. 1.

Fig. 3 shows an example of the constitution of the image decoding apparatus shown in Fig. 1.

Fig. 4 is a first diagram explaining an operation of the synthesis outputting processing portion 24 shown in Fig. 1.

Fig. 5 is a second diagram explaining a motion of the synthesis outputting processing portion 24 shown in Fig. 1.

Fig. 6 is a block diagram showing the structure of a conventional image decoding apparatus.

Fig. 7 is a block diagram showing the structure of the image decoding portion 11 shown in Fig. 6.

### DETAILED DESCRIPTION OF THE INVENTION

Hereinafter, an embodiment of the present invention is described with reference to the attached drawings.

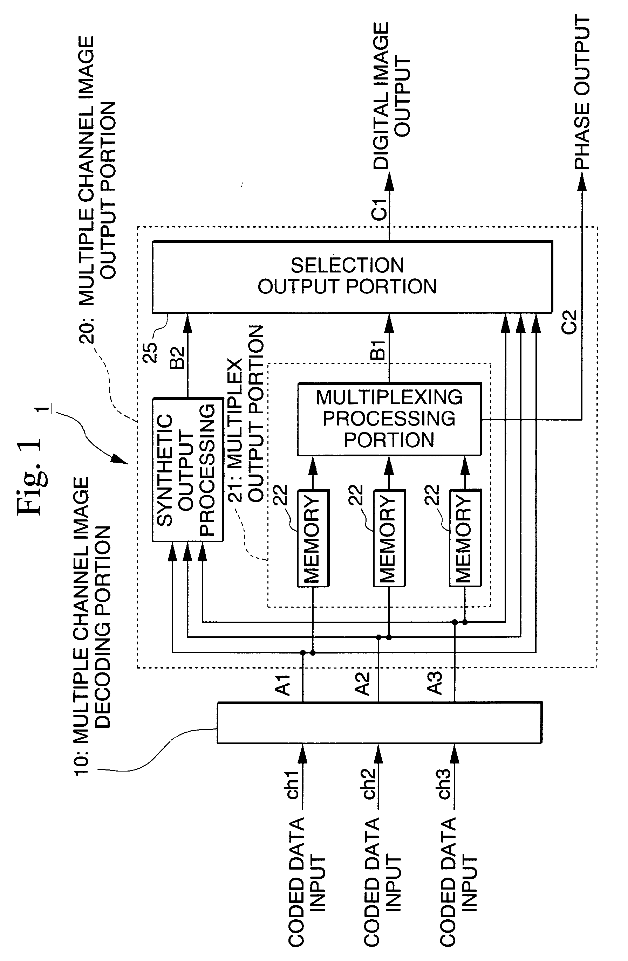

Fig. 1 is a block diagram showing the structure of the image decoding apparatus according to an embodiment of the present invention. In Fig. 1, since the multiple channel image decoding portion 10 has the same structure as the multiple channel image decoding portion 10 shown in Fig. 6, explanation of the multiple channel image decoding portion 10 is omitted. The input coded data chl to ch3 are the coded bit steams of channel 1 to 3, in the form f MPEG format.

In Fig. 1, reference numeral 20 denotes a multiple channel image output portion 20, which comprises a multiplex output portion 21, a synthesis output processing portion 24, and a selection output portion 25. The image data A1 to A3 for the channels 1 to 3 input to the multiple channel output portion 20 are input into the multiplex output portion 21, the synthesis output processing portion 24, and the selection output portion 25.

Subsequently, the input image data A1 to A3 are made to be stored in the memories 22 temporarily by the multiplex output portion 21. Subsequently, the multiplexing processing portion 23 provided in the multiplex output portion 21 reads the image data for each channel A1 to A3 in sequence and execute time-division multiplexing for outputting the image data as the multiplexed data B1 to the selection output portion 25. The synthesis output processing portion 24 outputs any one of at least two image data from among image data A1 to A3 to the selection portion 25 after generating a synthesis image data B2 for displaying as a single image data.

Subsequently, at the time of the multiplex output mode, the selection output portion 25 outputs the multiplexed data B1 input from the multiplex output portion 21 as a digital image data C1, in accordance with a predetermined output mode; and, at the time of the synthesis image output mode, the selection output portion 25 outputs the synthesis image data B2 input from the synthesis output processing portion 24 as a digital image data C1; and, at the time of single channel output mode, any one of one channel image data from among image data A1 to A3 input from the multiple channel image decoding portion 10 as digital image data C1. In addition, the multiplexing processing portion 23 generates a phase output signal C2 indicating the phase of one channel image data from among three channel image data A1 to A3, which are time-divisionally multiplexed with the multiplexed data B1.

It is noted that the selection output portion 25 comprises the only digital image output terminal for outputting the digital image data C1.

Here, the selection output portion 25 outputs a clock, to which the digital image data C1 is synchronized, in addition to the output of the digital image data C1. However, the clock is not shown in Fig. 1.

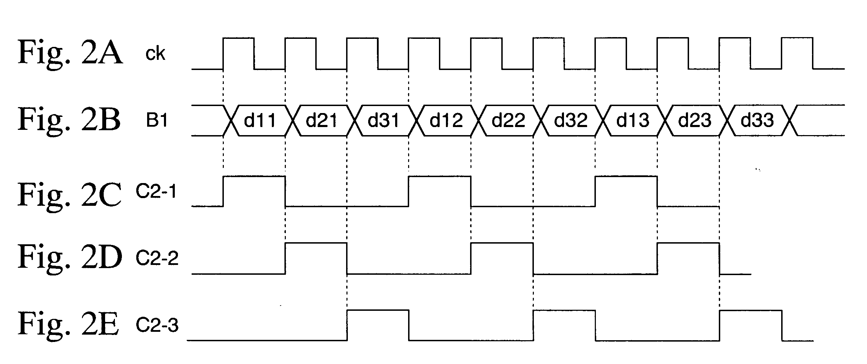

Next, an operation of the multiplex output portion 21 is described with reference to a time chart shown in Fig. 2.

First, the multiplexing processing portion 23 sequentially reads the first pixel data d11, d21, and d31 of image data A1 to A3 corresponding to each channel from respective memories 22 storing each image data A1 to A3. Subsequently, this first pixel data d11, d21, and d31 are output synchronously with the clock ck as the multiplexed data B1 after time division multiplexing as shown in Fig. 2(b). Similarly, the second pixel data d12, d22, and d32 are reads from respective memories 22, multiplexed with the multiplexed data B1, and then the third pixel data d13, d23, and d33 are read from respective memories 22 and multiplexed with the multiplexed data B1.

The multiplexing processing portion 23 generates any one of phase output signals from among phase signals C2-1 to C2-3, shown in Figs. 2(c) to 2(e) and outputs as the phase output signal C2. The phase signals C2-1 to C2-3 show phases of each time division multiplexing cycle on the multiplexed data B1 on which the image data A1 to A3 of each channel is multiplexed, and each phase signal is generated for each three clocks of the clock ck, that is, for the section corresponding to one clock of the clock at each time division multiplexing cycle. The phases shown by the phase signals C2-1 to C2-3 correspond to each image data A1 to A3 for each channel 1 to 3.

The above-described clock ck and the multiplexed data B I are output respectively as the clock CLK and the digital image data C1 from the selection output portion 25 at the time of multiplex output mode.

It is noted that the clock CLK, that is, the clock ck at the time of the multiplex mode is the channel number of times higher, that is, three times higher frequency than the clock CLK frequency at the time of the other modes. Accordingly, time division multiplexing makes it possible to output the image data for three channels A1 to A3 in an output time for outputting one channel within a time for outputting one channel image.

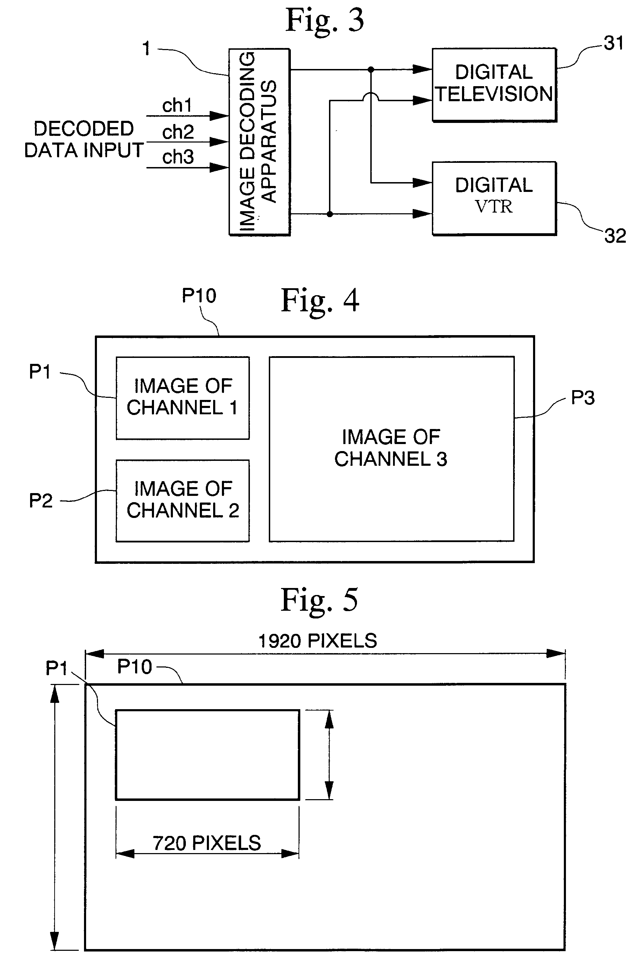

In the above-described embodiment, at the time of multiplex output mode, the image data of each channel Al to A3 are output from the only digital image output terminal, which is provided in the selection output portion 25 for the digital image C 1. Accordingly, as shown, for example, in Fig. 3, when the digital image data C1 output from the above-described image decoding apparatus 1 and the phase output signal C2 are connected to the digital television 31 and the digital VTR 32, each digital input matching equipment 31 or 32 is capable of a single or multiple channel image displaying or recording from among three channels by selecting desired channels of image data out of digital image data C1 based on the phase output signal C2. For example, when the phase signal C2-1 of the channel 1 is output as the phase output signal C2, each digital input matching equipment 31 or 32, connected to the image decoding apparatus 1, selects the image data of channels 2 and 3 at the timing for the phase output signal shifted by one clock of the clock CLK.

Here, one is enough as the number of the digital image output terminal provided in the above-described embodiment irrespective of the number of channels. As a result, in contrast to the conventional image decoding apparatus which needs the same number of digital image output terminals as the channels, it is possible for the present image decoding apparatus to reduce the number of digital image output terminals and to reduce the size of the apparatus.

Furthermore, as shown in the above-described embodiment, since it is possible to output multiple channel image data simultaneously, it is possible to reduce the maximum value of the current consumption. Furthermore, since it is not necessary to increase the digital image data output with the increase of the number of channels, and since the current consumption does not increase with the increase of the number of channels, the volume of the power supply for the present embodiment becomes not so large compared to the volume of the power supply required for the conventional image decoding apparatus, which results in preventing the possibility of generating noise.

It is noted that the multiplexing processing portion 23 is constituted such that it generates any one of signal from among phase signals C2-1 to C2-3 for outputting as the phase output signal C2 as shown in the above-described embodiment, the multiplexing processing portion 23 may generates the whole or a plurality of phase signals C2-1 to C2-3 for outputting.

Next, Fig. 4 is a diagram showing an example of synthesis images P10 generated by the synthesis output processing portion 24. In addition, Fig. 5 is a diagram showing an example of the relationship between the synthesized image P10 generated by the synthesis output processing portion 24 and an image of the channel 1 P1. The operation of the synthesis output processing portion 24 is described below with reference to Figs. 4 and 5.

As shown in Fig. 5, it is assumed that the image data A1 of channel 1 is converted into the 480 i format such as the channel 1 image P1 and the synthesized image P10 is converted into the 1080 i format. In this case, it is possible to synthesize four image at maximum maintaining the same level of resolution by overlapping the channel 1 image P1 prepared by the 480 i format on the synthesized images P10 prepared by the 1080 i format.

Based on the above knowledge, as shown in Fig. 4, the synthesis output processing portion 24 synthesizes the channel 1 image and the channel 2 image, both converted to the 480 i format, and also synthesizes the channel 3 image converted to the higher format than the 480 i format for displaying on the right side of the synthesized image P10. Subsequently, the synthesized image data B2 of the synthesized image P10 generated by the synthesis output processing portion 24 is output as the digital image data C1 from the selection output portion 25. Respective channel images P1 to P3 are displayed on a single screen by use of the synthesized image data B2 of the thus generated synthesized image P10.

Thus, the digital television 31 or the digital VTR 32 connected to the above-described image decoding apparatus shown, for example, in Fig. 3 provides simultaneous display or the simultaneous recording of image date of the multiple channels on a single image screen, without any particular processing of the image data of multiple channels for synthesizing to be synthesized on a single screen.

As shown in the above-described embodiment, when the coded data of the coded HDTV images are input, the selection output portion outputs the image data obtained by decoding the coded data and subsequently converting the decoded data to a prescribed image format.

In the above embodiment, although the same constitution as that of the multiple channel image decoding portion 10 is described for decoding the input three channel coded data chl to ch3 and for outputting three image data A1 to A3 after converting the coded data to the prescribed formats, the apparatus is not limited to the above described constitution.

As shown in the above embodiment, the multiple channel image output portion 20 is provided in a semiconductor device which decodes the input three channel coded data ch1 to ch3 and generates three image data A1 to A3.

In the above-described embodiment, the multiple channel image decoding portion 10, the multiplexing processing portion 23, the synthesis output processing portion 24, and the selection output portion 25 are preferably integrated in the same semiconductor device.

Although the number of channels to be input simultaneously in the present embodiment is defined as three, and the apparatus is constituted such that the three channel image data A1 to A3 are multiplexed for outputting one digital image data C1, the number of channels is not limited to three. It is possible to constitute an apparatus, which outputs one digital image C1 data by multiplexing respective image data.

As described above, since the image decoding apparatus according to the present invention is constituted such that it outputs a multiplexed data obtained by time division multiplexing of multiple channel image data and a phase output signal showing the phase relationship between multiple channel image data which is multiplexed in the multiplexed data, only one the digital image output terminal is sufficient irrespective of the number of channels. . As a result, it is possible to reduce the number of output terminals for outputting multiple channel image data simultaneously, which results in reducing the size of the apparatus.

Furthermore, since the multiple channel image data can be output simultaneously irrespective of the number of channels, the present apparatus is capable of reducing the maximum value of the current consumption compared to the current consumption of the conventional apparatus. In addition, since it is not necessary to increase the digital image data output with the increase of the number of channels, the volume of the power supply for the present apparatus can be maintained at constant without increasing as the case of the conventional image decoding apparatus. Therefore, it is possible for the decoding apparatus according to the present invention to prevent new possibility of suffering by noise.

Furthermore, since more than two image data from among multiple channel image data can be displayed on one image screen by generating synthesized data, the digital input matching apparatus connected to the decoding apparatus according to the present invention provides simultaneous display or simultaneous recording of the multiple channel image data without carrying out any particular synthesizing processing for displaying multiple image data on one image screen.

## Claims

1. An image decoding apparatus which comprises a multiple channel image data decoding device for decoding n-channel (n is an integer larger than 2) image coded data, comprising:
a multiplex output device for outputting said n-channel image data after said n-channel decoded image data are time division multiplexed.

2. An image decoding apparatus according to claim 1, wherein said multiplex output device generates and outputs:
said n-channel multiplexed image data after being time division multiplexed; and
a phase output signal showing the positional relationship of said n-channel image data after being time division multiplexed.

3. An image decoding apparatus according to claim 2, wherein said phase output signal represents at least one phase of said n-channel image data which is multiplexed in said multiplexed image data.

4. An image decoding apparatus according to claim 1, wherein said multiplex output device carries out time division multiplexing by use of a clock having a frequency of more than n times higher than the output clock used at the time for outputting single channel image data without multiplexing.

5. An image decoding apparatus according to claim 1, wherein said image decoding apparatus comprises a synthesis output device which generates and outputs synthesized image data for displaying more than two images from among said n-channel image data on one image screen.

6. An image decoding apparatus according to claim 5, wherein said image decoding apparatus comprises a selection output device for outputting any one of said multiplexed data, said synthesized image data, or any one of one channel image data from among said n-channel image data as one digital image data output.

7. An image decoding apparatus according to claim 1, wherein said image decoding apparatus is formed on a substrate of one semiconductor integrated circuit.

8. A semiconductor device comprising
a synthesis output device which generates and outputs synthesized image data for displaying more than two images on one image screen at one time out of said n-channel image data;
a selection output device which outputs any one of said multiplexed data, said synthesized image data, or any one of one channel image data from among n-channel image data as one digital image data output.

9. A semiconductor device according to claim 8 comprising:
a synthesis output device which outputs more than two image data among said n-channel image data;
a selection output device which outputs any one of said multiplex data, said synthesized image data, or any one channel image data from among n-channel image data as the digital image data output.

10. An image decoding method, which decodes input n-channel (n is an integer more than 2) image coded data and generates said n-channel image data, comprising the steps of generating and outputting multiplexed data obtained by time division multiplexing of said n-channel image data and a phase output signal which indicates the positional relationship of said n-channel image data, which is multiplexed in said multiplexed data.

11. An image decoding method according to claim 10, wherein the method comprises the steps of:
generating synthesized image data for displaying more than two of any image data from among said n-channel image data; and
outputting any one of image data among said multiplexed data, said synthesized image data, or any one channel image data from among said n-channel image data.
